## Europäisches Patentamt
## European Patent Office
## Office européen des brevets

(19)

(11) Veröffentlichungsnummer: **0 201 663**
**B1**

(12)

# EUROPÄISCHE PATENTSCHRIFT

(45) Veröffentlichungstag der Patentschrift:
**15.11.89**

(51) Int. Cl.⁴: **G 01 N 31/22**

(21) Anmeldenummer: **86101251.6**

(22) Anmeldetag: **31.01.86**

(54) **Prüfröhrchen.**

(30) Priorität: **14.05.85 DE 3517324**

(43) Veröffentlichungstag der Anmeldung:
**20.11.86 Patentblatt 86/47**

(45) Bekanntmachung des Hinweises auf die Patenterteilung:
**15.11.89 Patentblatt 89/46**

(84) Benannte Vertragsstaaten:
**DE FR GB NL**

(56) Entgegenhaltungen:
**DE-A-2 416 047**
**FR-A-2 463 930**
**US-A-3 620 677**

(73) Patentinhaber: **Drägerwerk Aktiengesellschaft,
Moislinger Allee 53- 55, D-2400 Lübeck 1 (DE)**

(72) Erfinder: **Heim, Ulrich, Dr., Klosterstrasse 19,
D-2067 Reinfeld (DE)**

EP 0 201 663 B1

## Beschreibung

Die Erfindung betrifft ein Prüfröhrchen zum Nachweis von Gaskomponenten in Luft nach dem Oberbegriff des Anspruchs 1.

Derartige Prüfröhrchen sind aus der US-PS-3 620 677 bekanntgeworden. Dort ist in einer Umhüllung ein mit einem Farbreagenz imprägnierter körniger Füllkörper enthalten, welcher in seiner Querausdehnung unterschiedlich geformt ist. Damit kann das zum Nachweis eines gasförmigen Schadstoffes benötigte Fortschreiten der Reaktionszone durch geeignete Wahl des Füllkörper-Querschnittes und seiner Veränderung im Verlaufe der Prüfröhrchen-Längsachse derart kalibriert werden, daß bei unterschiedlichen Gaskonzentrationen der verfärbte Bereich in bestimmtem Zusammenhang mit der Menge des nachgewiesenen Schadstoffes steht. Durch geeignete Formgebung des Füllkörpers kann ein Prüfröhrchen hergestellt werden, welches die gewünschte Meßgenauigkeit auch bei unterschiedlichen Meßbereichen der Prüfröhrchen ermöglichen soll.

Ein Teststreifen nach der DE-A-24 63 930 besitzt ein Gel mit einem Reagenz, welches mit einer zu untersuchenden Lösung reaktionsfähig ist, wobei die Dicke der Gelschicht längs des Streifens variiert. Es können auch mehrere Gelschichten nebeneinander auf dem Streifen vorgesehen sein, wobei jede Gelschicht mit einem unterschiedlichen Reagenz versehen ist und eine sich verändernde Schichtdicke aufweist.

Dieser bekannte Teststreifen ist nicht für die Untersuchung gasförmiger Proben geeignet, und das Fortschreiten einer sichtbaren Reaktion ist abhängig von der Schichtdicke des Gels.

In der FR-A-2 463 930 ist ein Prüfröhrchen mit einer körnigen Füllung dargestellt, die aus mehreren, insbesondere aus drei hintereinander angeordneten Schichten besteht, wobei jeweils die erste und die letzte Schicht eine gröbere Körnung aufweist als die dazwischenliegende, und die zur Einstellung der Strömungsgeschwindigkeit des zu untersuchenden Mediums dienen. Dabei sind diese Regulierungsschichten gegenüber der zu untersuchenden Substanz inert.

Da bei den bekannten Prüfröhrchen unterschiedliche Querschnitte des von dem den Schadstoff enthaltenden Gasstrom durchströmten Bereichs mit imprägniertem, körnigen Füllmaterial entlang der Prüfröhrchenachse aufeinander folgen, treten auch unterschiedliche Strömungsgeschwindigkeiten und Strömungsprofile des zu untersuchenden Gases auf. Diese ungleichmäßige Strömung infolge der nicht völlig gleichmäßigen Packung des Trägermaterials ergibt örtlich unterschiedliche Luftwiderstände. Durch die sich ändernden Strömungsgeschwindigkeiten wird nicht mehr gewährleistet, daß an allen Orten innerhalb des Prüfröhrchens die notwendige Verweilzeit des nachzuweisenden Schadstoffs an dem imprägnierten Füllkörper aufrechterhalten bleibt, um eine quantitative Umsetzung des Indikators herbeizuführen. Die erstrebte Meßgenauigkeit wird dadurch wieder zunichte.

Die Aufgabe der vorliegenden Erfindung wird darin gesehen, ein Prüfröhrchen der bekannten Art derart zu verbessern, daß bei sich nicht veränderndem Strömungswiderstand eine entlang des Prüfröhrchens sich verändernde Empfindlichkeit für den nachzuweisenden Schadstoff erhalten wird.

Die Aufgabe wird durch ein Prüfröhrchen gemäß den Merkmalen des Anspruchs 1 gelöst.

Durch diese Maßnahme wird erreicht, daß der Strömungswiderstand im Prüfröhrchen durch den Füllkörper beim Durchgang der zum Nachweis der Schadstoffmenge notwendigen Prüfluftmenge konstant ist. Durch geeignete Variation der Anteile von Indikator und Trägersubstanz wird die gesamte Prüfluftmenge je nach Erfordernis und gewünschter Nachweisgenauigkeit auf eine mehr oder weniger ausgedehnte Indikatormenge verteilt. Die Änderung der Zusammensetzung der Anteile an aufgebrachtem Indikator und Trägersubstanz wird beispielsweise dadurch erreicht, daß die Trägersubstanz durchgehend mit dem Indikator imprägniert ist, dessen Konzentration entlang der Längsachse jedoch unterschiedlich hoch ist.

Es ist auch möglich, die Trägersubstanz mit einer gleichbleibenden Konzentration an Indikator zu imprägnieren, wobei jedoch der imprägnierte Bereich auf der Trägersubstanz entlang der Längsachse unterschiedliche Querausdehnung besitzt.

Vorteilhafterweise ergibt sich bei Verwendung einer körnigen Trägersubstanz ein unterschiedlicher Indikatoranteil durch ein entsprechendes Mischungsverhältnis unimprägnierter und mit gleichen Indikatormengen imprägnierter Trägersubstanz. Diese Anordnung besitzt den Vorteil, daß zur Herstellung eines solchen Prüfröhrchens lediglich zwei Sorten von Füllmaterial, nämlich unimprägnierte und mit gleichbleibender Indikatormenge imprägnierte Trägersubstanz, notwendig sind. Durch Einstellung wechselnder Mischungsverhältnisse ist jeder gewünschte Anteil an Indikator im Füllkörper darstellbar.

Werden die Füllmaterialien jeweils in voneinander getrennten Bereichen angeordnet, kann zur Verbesserung der Ablesegenauigkeit, insbesondere beim Nachweis geringer Schadstoffmengen, auf diese Weise die imprägnierte Trägersubstanz gehäuft im Sichtbereich angeordnet sein.

Die Formgebung des imprägnierten Bereiches des Füllkörpers geschieht vorteilhafterweise in der Art, daß dem Füllkörper ein Bindemittel zugesetzt wird. Somit kann in dem Prüfröhrchen zunächst der imprägnierte Bereich des Füllkörpers geformt werden, welcher nach Aushärten des Bindemittels in seiner Form stabil bleibt, so daß im nachhinein die vorhandenen Hohlräume oder Freizonen mit der nicht imprägnierten Trägersubstanz gefüllt werden können.

Zur Abteilung des imprägnierten Bereiches von dem nicht imprägnierten Bereich kann zweckmäßigerweise eine Zwischenlage aus einem Gitternetzwerk oder auch einem porösen Faserwerk benutzt werden, welche den Strömungswiderstand entlang des Prüfröhrchens nicht störend beeinflußt. Die Zwischenlage kann zweckmäßigerweise als vorgeformte Abtrennung in das noch ungefüllte Prüfröhrchen eingebracht werden.

Die Erfindung' wird anhand der Zeichnung näher erläutert und im folgenden beschrieben:

Es zeigen:

Fig. 1     das Prüfröhrchen im Schnitt
Fig. 2     das Prüfröhrchen mit einer Zwischenlage im Schnitt.

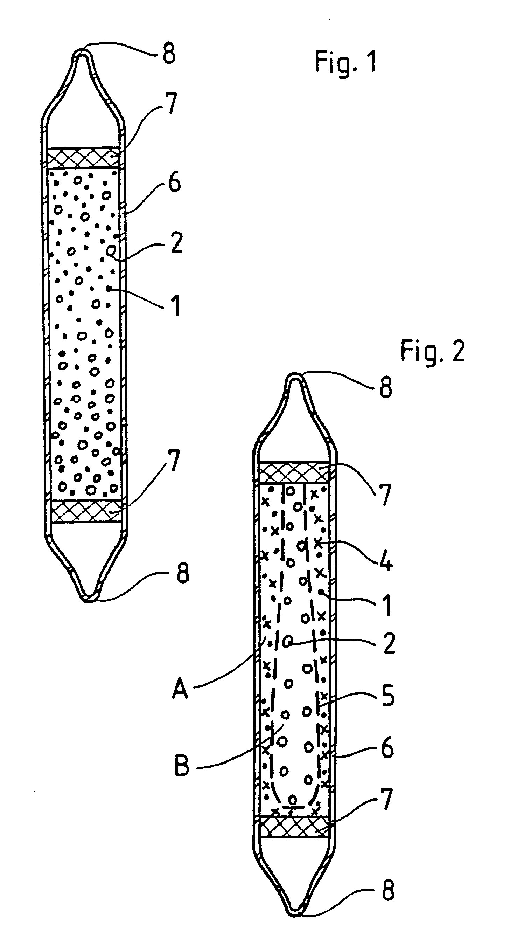

Ein in Fig 1 dargestelltes Glasröhrchen 6 besitzt eine Füllung, die sich aus einer Mischung von unimprägnierter Trägersubstanz 2 und imprägnierter Trägersubstanz 1 in unterschiedlichem Mischungsverhältnis zusammensetzt.

Das Glasröhrchen 6 weist zwischen seinen abbrechbaren Spitzen 8 zwei vliesartige Begrenzungen 7 auf. Der Füllkörper setzt sich zusammen aus imprägnierter körniger Trägersubstanz 1 (durch Punkte dargestellt) und unimprägnierter körniger Trägersubstanz 2 (durch offene Kreise dargestellt). Der Anteil an imprägnierter Trägersubstanz 1 nimmt in dieser dargestellten Mischung von unten nach oben zu.

In Fig. 2 ist ein Glasröhrchen 6 dargestellt, zwischen dessen Begrenzungen 7 der Füllkörper aus einem Bereich A mit imprägnierter Trägersubstanz 1 und einem Bereich B mit unimprägnierter Trägersubstanz 2 angeordnet ist. Die Bereiche A und B sind durch die Zwischenlage 5 voneinander abgeteilt. Die imprägnierte Trägersubstanz 1 ist im Bereich A mit einem zusätzlichen, in der Fig. 2 mit Kreuzen dargestellten Bindemittel 4 versehen. Die vliesartige Zwischenlage 5 ist als ein gasdurchlässiger Hohlkörper durch eine unterbrochene Linienführung dargestellt.

Zur Herstellung eines Prüfröhrchens nach Fig. 2 kann beispielsweise in dem leeren Glasröhrchen zunächst die Zwischenlage 5 gehalten sein, wobei die körnige mit einem Bindemittel 4 versetzte imprägnierte Trägersubstanz 1 zunächst in den Bereich A eingefüllt wird. Nach Austrocknung des Bindemittels 4 besitzt die Trägersubstanz 1 in dem Bereich A eine stabile Konsistenz. Nun kann entweder die Zwischenlage 5 entfernt werden und der übriggebliebene Hohlraum des Bereiches B mit unimprägnierter körniger Trägersubstanz 2 aufgefüllt werden, oder es kann auch die Zwischenlage 5 als Wandauskleidung des Bereiches A eingesetzt bleiben, wobei der Hohlraum des Bereiches B mit der nicht imprägnierten körnigen Trägersubstanz 2 gefüllt werden kann.

## Patentansprüche

1. Prüfröhrchen zum Nachweis von Gaskomponenten in Luft mit einem sich entlang der Längsachse des Prüfröhrchens ändernden, den Querschnitt des Prüfröhrchens ausfüllenden gasdurchlässigen Füllkörper und einem auf den Trägersubstanz des Füllkörpers aufgebrachten Indikator für die nachzuweisende Gaskomponente wobei sich der Füllkörper derart entlang der genannten Achse ändert, daß sich eine vorbestimmte, sich entlang der genannten Achse ändernde Empfindlichkeit für die nachzuweisende Gaskomponente ergibt, dadurch gekennzeichnet, daß der Querschnitt des Füllkörpers entlang der Längsachse gleich bleibt und daß der Füllkörper aus einer Zusammensetzung mit entlang der Längsachse sich ändernden Anteilen an aufgebrachtem Indikator und Trägersubstanz besteht.

2. Prüfröhrchen nach Anspruch 1, dadurch gekennzeichnet, daß die Zusammensetzung aus unterschiedlichen Anteilen an mit gleichen Mengen des Indikators imprägnierter (1) körniger und unimprägnierter körniger Trägersubstanz (2) besteht.

3. Prüfröhrchen nach Anspruch 2, dadurch gekennzeichnet, daß die imprägnierte Trägersubstanz (1) und die unimprägnierte Trägersubstanz (2) in getrennten Bereichen (A, B) angeordnet sind.

4. Prüfröhrchen nach Anspruch 3, dadurch gekennzeichnet, daß einer der Bereiche (A, B) zusätzlich mit einem Bindemittel (4) versetzt ist.

5. Prüfröhrchen nach Anspruch 3, dadurch gekennzeichnet, daß die Bereiche (A, B) durch eine Zwischenlage (5) voneinander abgeteilt sind.

6. Prüfröhrchen nach Anspruch 5, dadurch gekennzeichnet, daß die Zwischenlage (5) aus einem Gitternetzwerk besteht.

7. Prüfröhrchen nach Anspruch 5, dadurch gekennzeichnet, daß die Zwischenlage (5) aus einem porösen Faserwerk besteht.

## Claims

1. Test tube for detecting gas components in air having a gas-permeable filling body, varying along the longitudinal axis of the test tube, and filling the cross section of the test tube, and an indicator for the gas components to be detected, applied on the carrier material of the filling body, whereby the filling body varies in such a manner along the said axis, that a predetermined sensitivity for the gas components to be detected, varying along the said axis results, characterised in that the cross section of the filling body remains the same along the longitudinal axis and in that the filling body consists of a composition with portions varying, along the longitudinal axis, in respect of the applied indicator and carrier material.

2. Test tube according to claim 1,

characterised in that the composition consists of different portions of the impregnated granular (1) and unimpregnated granular carrier material (2) with the same quantity of the indicator.

3. Test tube according to claim 2,

characterised in that the impregnated carrier material (1) and the unimpregnated carrier material (2) are arranged in separated regions (A, B).

4. Test tube according to claim 3, characterised in that one of the regions (A, B) is mixed in addition with a binding agent (4).

5. Test tube according to claim 3, characterised in that the regions (A, B) are separated by an intermediate layer (5).

6. Test tube according to claim 5, characterized in that the intermediate layer (5) consists of a grid network.

7. Test tube according to claim 5, characterised in that intermediate layer (5) consists of a porous fibrous material.

**Revendications**

1. Tube indicateur pour la détection de composants gazeux dans l'air, avec un corps de remplissage perméable aux gaz, remplissant la section du tube indicateur et variable dans le sens de l'axe longitudinal du tube indicateur, et avec un indicateur pour les composants gazeux à détecter, ajouté sur la substance porteuse du corps de remplissage, la variation du corps de remplissage dans le sens de l'axe précité étant telle qu'il en résulte une sensibilité aux composants gazeux à détecter qui varie de façon prédéterminée dans le sens de l'axe précité, caractérisé en ce que la section du corps de remplissage reste constante dans le sens de l'axe longitudinal et en ce que le corps de remplissage est constitué par une composition avec des parts, variables dans le sens de l'axe longitudinal, d'indicateur ajouté et de substance porteuse.

2. Tube indicateur selon la revendication 1, caractérisé en ce que la composition est constituée par des portions différentes d'une substance porteuse granuleuse de mêmes masses, l'une (1) imprégnée par l'indicateur et l'autre (2) non imprégnée.

3. Tube indicateur selon la revendication 2, caractérisé en ce que la substance porteuse imprégnée (1) et la substance porteuse non imprégnée (2) sont disposées dans des régions séparées (A, B).

4. Tube indicateur selon la revendication 3, caractérisé en ce que l'une des régions (A, B) est remplie additionnellement d'un liant (4).

5. Tube indicateur selon la revendication 3, caractérisé en ce que les régions (A, B) sont séparées l'une de l'autre par une couche intermédiaire (5).

6. Tube indicateur selon la revendication 5, caractérisé en ce que la couche intermédiaire (5) est constituée par une structure en grille.

7. Tube indicateur selon la revendication 5, caractérisé en ce que la couche intermédiaire (5) est constituée par une structure fibreuse poreuse.

Fig. 1

Fig. 2